Europäisches Patentamt

European Patent Office

Office européen des brevets

(19)

(11) Veröffentlichungsnummer : **0 338 235 B1**

(12) **EUROPÄISCHE PATENTSCHRIFT**

(45) Veröffentlichungstag der Patentschrift :
06.05.92 Patentblatt 92/19

(51) Int. Cl.$^5$ : **F16C 13/00**

(21) Anmeldenummer : **89104163.4**

(22) Anmeldetag : **09.03.89**

(54) **Dichtungsanordnung.**

(30) Priorität : **22.04.88 DE 3813595**

(43) Veröffentlichungstag der Anmeldung :
**25.10.89 Patentblatt 89/43**

(45) Bekanntmachung des Hinweises auf die
Patenterteilung :
**06.05.92 Patentblatt 92/19**

(84) Benannte Vertragsstaaten :
**CH GB IT LI SE**

(56) Entgegenhaltungen :
**DE-A- 2 254 392
DE-A- 3 608 374
DE-B- 1 193 739
DE-B- 1 461 066**

(56) Entgegenhaltungen :
**DE-B- 2 025 777
DE-B- 2 718 414
DE-C- 3 118 063
DE-C- 3 128 722
GB-A- 2 061 456**

(73) Patentinhaber : **Eduard Küsters
Maschinenfabrik GmbH & Co. KG
Gladbacher Strasse 457
W-4150 Krefeld 1 (DE)**

(72) Erfinder : **Kubik, Klaus
Hardenbergstrasse 90
W-4154 Tönisvorst 1 (DE)**

(74) Vertreter : **Palgen, Peter, Dipl.-Phys. Dr.
Mulvanystrasse 2
W-4000 Düsseldorf (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Dichtungsanordnung der dem Oberbegriff des Anspruchs 1 entsprechenden Art.

Die Kraft zur Erzeugung des Liniendrucks wird bei solchen Walzen durch die in der Längskammer befindliche Druckflüssigkeit in Richtung des Walzspalts auf den Innenumfang der umlaufenden Hohlwalze übertragen. Die Längskammer ist in Umfangsrichtung durch die beiden Längsdichtungen und in Längsrichtung durch die beiden Endquerdichtungen zu einem weitgehend geschlossenen Druckraum abgedichtet. Die Endquerdichtungen müssen sich an den Enden der Hohlwalze befinden, weil ja auch der Liniendruck im Bereich der Längenerstreckung der Hohlwalze wirken soll. Sie werfen keine größeren Probleme auf, wenn sich zwischen Hohlwalze und Querhaupt Lager befinden, wie es in der DE-B- 20 25 777 dargestellt ist. Diese Lager sind dann unmittelbar neben der Endquerdichtung angeordnet und zentrieren das Querhaupt innerhalb der Hohlwalze, so daß die radialen Verlagerungen, die die Endquerdichtung und ihre Gegenfläche erfahren, minimal sind.

Während die Endquerdichtungen in ihrer Position in den Enden der Hohlwalze festliegen, gibt es auch Konstruktionen, in denen sich das Lager in einiger Entfernung axial außerhalb der Endquerdichtungen befindet, wie es bei der dem Oberbegriff zugrundeliegenden DE-A- 36 08 374 der Fall ist, sowie andere Konstruktionen, bei denen überhaupt kein Lager vorhanden ist und sich das Querhaupt in einer Führung radial zur Hohlwalze verlagern kann, wie es an einer Walze mit anderer hydraulischer Abstützung des Walzenrohrs in der DE-A- 22 54 392 gezeigt ist.

Bei den letztgenannten Ausführungsformen fehlt es an der Zentrierwirkung eines unmittelbar neben der Endquerdichtung angeordneten Lagers und treten im Bereich der Endquerdichtungen durchaus erhebliche radiale Verlagerungen zwischen Querhaupt und Hohlwalze auf, die die Funktion einer Endquerdichtung beeinträchtigen können. Es kommt dann zu Leistungsverlusten durch die an den Undichtigkeiten abströmende Druckflüssigkeit, was so weit gehen kann, daß angestrebte hohe Drücke in der Längskammer überhaupt nicht mehr erreicht werden können. Auch unter einem anderen Aspekt ist die Aufrechterhaltung der Dichtigkeit erwünscht: die Druckflüssigkeit ist in manchen Anwendungsfällen ein hochbeheiztes Thermalöl, während die Lager einen separaten Schmierölkreislauf aufweisen. Die Vermischung von Thermalöl und Schmieröl muß unterbleiben. Zur Erreichung dieses Ziels trägt eine einwandfreie Funktion der Endquerdichtung auch bei größeren Verlagerungen von Querhaupt und Hohlwalze bei.

Der Erfindung liegt die Aufgabe zugrunde, eine Dichtungsanordnung der dem Oberbegriff des Anspruchs 1 entsprechenden Art dahin auszugestalten, daß sie auch bei größeren Verlagerungen des Querhaupts gegenüber der Hohlwalze und bei Verwendung hochbeheizter Druckflüssigkeit eine gute Dichtwirkung entfaltet.

Diese Aufgabe wird durch die in Anspruch 1 wiedergegebene Erfindung gelöst.

Die hydraulische Entlastungskammer dient dazu, den Anlagedruck an der der Längskammer abgewandten Flanke der Nut nicht zu groß werden zu lassen, so daß die kreissegmentförmige Endquerdichtung in der Nut mit relativ geringen Kräften verschoben werden kann, was besonders von Bedeutung ist, wenn die Dichtung ziemlich weit aus der Nut herausragt und auch noch Kantmomente auf sie wirken. Die in der Andruckkammer anstehende Druckflüssigkeit, deren Druck von dem Druck in der Längskammer abgeleitet ist, schiebt die Endquerdichtung ständig nach, wenn sich die Hohlwalze auf der Wirkseite vom Querhaupt entfernt, und hält die Endquerdichtung im übrigen ständig in Anlage an der Hohlwalze, und zwar mit einer Kraft, die umso größer ist, je höher der Druck in der Längskammer wird.

Die Andruckkammer verändert bei Verlagerungen der Dichtung ihre Gestalt. Sie ist ebenfalls kreissegmentförmig, wobei die Nut und die Endquerdichtung die Begrenzungen in axialer und radialer Richtung bilden. In Umfangsrichtung hat die kreissegmentförmige Endquerdichtung irgendwo, meist auf einander diametral gegenüberliegenden Seiten des Querhaupts, Enden, an denen der von der Endquerdichtung und der Nut begrenzte Raum normalerweise offen ist.

Um eine hydraulisch geschlossene Andruckkammer zu bilden, empfiehlt sich daher die Ausgestaltung nach Anspruch 2, die in einer bevorzugten Ausführungsform durch die Federstreifen nach den Ansprüchen 3 und 4 gebildet sein kann.

Eine solche Anordnung ist nicht hermetisch dicht; dies ist aber auch nicht erforderlich, denn es reicht, wenn die Druckflüssigkeit wenigstens so weit angestaut wird, daß der gewünschte Druck mit akzeptabler Pumpenleistung aufrechterhalten werden kann.

Die Verbindung der Andruckkammer mit der Längskammer kann durch einen in Achsrichtung durchgehenden Durchlaß der Endquerdichtung geschaffen sein. Der Druck in der Längskammer drückt die Endquerdichtung an die gegenüberliegende Flange der Nut. Zwischen der der Längskammer zugewandten Flanke der Nut und der Endquerdichtung besteht daher ein gewisses Spiel. In diesen Zwischenraum dringt die Druckflüssigkeit der Längskammer ein und tritt durch den Durchlaß in die auf der gegenüberliegenden Seite gelegene Entlastungskammer über. Die Enge des Spaltes zwischen der Endquerdichtung und der auf der Seite der Längskammer gelegenen Flanke der Nut beugt einem Abströmen zu großer Flüssigkeitsmengen aus der Längskammer vor. Andererseits reicht die übertretende Menge aus, um in der Entlastungskammer den gewünschten Druck aufzubauen.

Das Merkmal des Anspruchs 6 hat zwei Wirkungen: einerseits wird dadurch gleichzeitig ein Zugang zu der unter der Endquerdichtung zwischen dieser und dem Nutgrund gebildeten Andruckkammer geschaffen, so daß auch diese mit Druckflüssigkeit aus der Längskammer gefüllt werden kann, und zum anderen erhöhen die radial nach innen durchgehenden Durchlässe die Flexibilität der Endquerdichtung, die sich dadurch dem Innenumfang der Hohlwalze besonders gut anschmiegt.

Eine wichtige Weiterbildung der Erfindung im Hinblick auf den Anschluß der Endquerdichtung an mit ihren Endflächen stumpf gegen die der Längskammer zugewandte Seitenfläche der Endquerdichtung stoßende Längsdichtungen, die in ihrer Funktion allerdings nicht an die vorstehend geschilderte besondere Ausbildung der Endquerdichtung gebunden ist, ist Gegenstand des Anspruchs 7. Die Längsdichtungen bestehen meist aus einem Material, welches von dem Stahl des Querhauptes verschiedene thermische Ausdehnungseigenschaften hat. Im allgemeinen wird der Ausdehnungskoeffizient des Dichtungsmaterials größer als der von Stahl sein. Dann muß entweder bei kalter Walze ein nicht unerhebliches Spiel zwischen der Längsdichtung, die ja eine erhebliche Länge hat und sich absolut entsprechend ausdehnt, und der Endquerdichtung belassen werden, oder es kommt bei hohen Temperaturen der Druckflüssigkeit in der Längskammer zu einem Verklemmen der Endquerdichtung unter der Wirkung der sich ausdehnenden und die Endquerdichtung gegen die Nutflanke pressenden Längsdichtung. Die Endquerdichtung ist dann in radialer Richtung nicht mehr frei, und es entstehen Undichtigkeiten und starker Verschleiß. Um dies zu vermeiden, werden die Längsdichtungen gemäß Anspruch 7 an den Endquerdichtungen festgelegt, so daß sie sich in Längsrichtung nicht mehr verlagern können und ein das freie Spiel der Endquerdichtung in ihrer Nut gewährleistender, kein zu großes Leck bildender Abstand fixiert ist. Es wird irgendwo im Längenbereich der Längsdichtungen eine Teilung vorgenommen, an der sich die aneinandergrenzenden Enden der Hälften einer Längsdichtung derart etwas überlappen, daß eine gewisse Verlagerung der beiden Enden gegeneinander möglich ist, ohne daß eine Stelle größerer Undichtigkeit entsteht.

Die Festlegung kann durch eine Verstiftung erfolgen (Anspruch 8).

Die Längsdichtungen sind in vielen Fällen nach dem grundsätzlichen Typus der DE-B- 11 93 739 ausgebildet. Sie haben im Anlagebereich eine Anlagefläche einer gewissen Breite, die in ihrer Gestalt der Gestalt des Innenumfangs der Hohlwalze angepaßt ist, sei es, daß eine solche Anlagefläche eigens gefertigt wird, sei es, daß sie sich nach einer gewissen Einlaufzeit von selbst ausbildet. Die Dichtung funktioniert optimal und gleitet mit relativ geringer Flächenpressung auf einem Flüssigkeitsfilm, solange die Anlagefläche vollflächig an dem Innenumfang der Hohlwalze anliegt. Wenn aber eine Verlagerung der Hohlwalze gegenüber dem Querhaupt stattfindet, ändert sich auch die Kippstellung der Längsdichtung ein wenig und bilden sich an der Anlagefläche Facetten mit höherer Flächenpressung und höherem Verschleiß.

Zur Verminderung dieses unerwünschten Effektes trägt die Ausgestaltung nach Anspruch 9 bei.

Es gibt verschiedene Möglichkeiten, die Längsdichtungen am Querhaupt anzubringen. Aus geometrischen Gründen gibt es hierfür eine Stelle, bei der bei einer vorgegebenen Verlagerung der Hohlwalze gegenüber dem Querhaupt die Winkeländerung der Anlagefläche gegenüber dem Innenumfang der Hohlwalze ein Minimum ist. Diese Stelle sollte für die Anbringung der Längsdichtung gewählt werden.

Eine alternative Lösung des gleichen Problems ist Gegenstand des Anspruchs 10. Hierbei kann sich der eine Teil der Längsdichtung gegenüber dem anderen verschwenken und selbsttätig dem Innenumfang der Hohlwalze anpassen.

Dies kann beispielsweise in der in Anspruch 11 wiedergegebenen Weise verwirklicht sein.

Um die Ausbildung des Gleitfilms zwischen der Anlagefläche und dem Innenumfang der Hohlwalze zu unterstützen, empfiehlt sich die Ausgestaltung nach Anspruch 12.

An der Innenumfangsfläche der Hohlwalze haftet ein Ölfilm an, der in den sich durch die Wölbung ergebenden Spalt hineingezogen wird und eine tragfähige Flüssigkeitsschicht zwischen Längsdichtung und Innenumfang der Hohlwalze aufbaut (Mitchell-Effekt), ähnlich wie dies für hydraulisch belastete Druckschuhe in der DE-B- 14 61 066 beschrieben ist.

Bei dem aus der DE-B- 11 93 739 bekannten Dichtungstyp hängt der Druck, mit welchem die Anlagefläche gegen den Innenumfang der Hohlwalze gepreßt wird, vom Druck in der Längskammer ab. Bei hohen Drücken in der Längskammer kann dies zu sehr hohen und verschleißträchtigen Anlagedrücken führen. Um dies zu vermeiden, kann in der Anlagefläche eine entlastende Längsausnehmung vorgesehen sein (Anspruch 13), die sich von selbst mit Druckflüssigkeit füllt.

Eine mit einer Zuleitung versehene Entlastungskammer für eine Längsdichtung anderen Typs ist aus der DE-B- 20 25 777 ersichtlich.

Die beschriebenen Gestaltungen können an einer Längsdichtung aus einem einheitlichen Material vorgesehen sein, aber auch an einer solchen mit einem gleitgünstigen und verschleißarmen Einsatz (Anspruch 14), wie er für Querdichtungen aus der DE-C- 31 28 722 und für Längsdichtungen anderer Art aus der DE-B- 27 18 414 bekannt ist.

In der Zeichnung sind Ausführungsbeispiele der Erfindung schematisch dargestellt.

Fig. 1 zeigt eine erfindungsgemäße Walze im Längsschnitt;

Fig. 2 zeigt einen Querschnitt nach der Linie II-II in Fig. 1;

Fig. 3 zeigt eine Ansicht einer Endquerdichtung in Achsrichtung von der Außenseite der Walze her;

Fig. 4 zeigt eine Ansicht gemäß Fig. 3 von rechts;

Fig. 5 zeigt einen Querschnitt nach der Linie V-V in vergrößertem Maßstab;

Fig. 6 bis 10 zeigen verschiedene Ausführungsformen in Betracht kommender Längsdichtungen;

Fig. 11 zeigt einen Teilquerschnitt entsprechend Fig. 2 in vergrößertem Maßstab;

Fig. 12 zeigt einen Querschnitt, der die geometrischen Verhältnisse bei dem verwendeten Dichtungstyp wiedergibt.

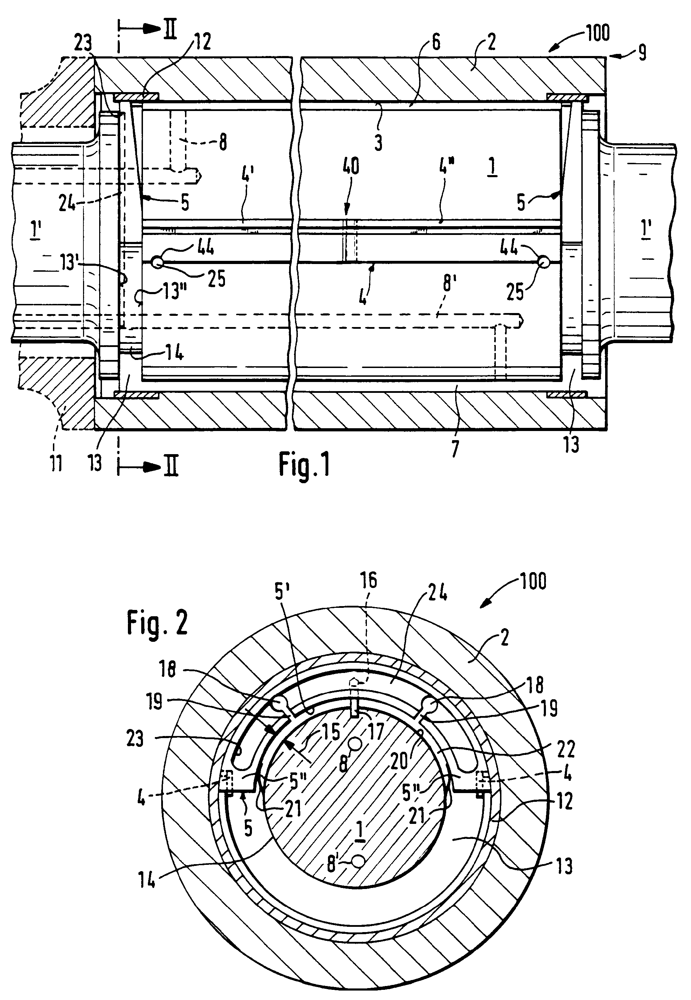

Die in Fig. 1 als Ganzes mit 100 bezeichnete Walze besteht aus einem feststehenden Querhaupt 1, um welches eine ringsum Abstand zu dem Querhaupt 1 belassende Hohlwalze 2 umläuft. Das Querhaupt 1 steht mit seinen Enden 1′ aus der Hohlwalze 2 hervor und ist dort in einem Walzenständer, an den Schwingen eines Kalanders oder in ähnlicher Weise gelagert.

Der Zwischenraum zwischen dem Querhaupt 1 und dem Innenumfang 3 der Hohlwalze 2 ist durch zu beiden Seiten des Querhaupts angebrachte, gegen den Innenumfang 3 dichtend anliegende Längsdichtungen 4 sowie an den beiden Enden der Hohlwalze vorgesehene Endquerdichtungen 5 in eine im wesentlichen geschlossene Längskammer 6 und den übrigen Teil 7 des Zwischenraums unterteilt. Der Längskammer 6 kann durch eine Zuleitung 8 im Querhaupt 1 Druckflüssigkeit zugeführt werden. In dem gezeigten Ausführungsbeispiel liegt der Walzspalt 9 auf der gemäß Fig. 1 oberen Seite der Walze 100 und liegt die Längskammer 6 zylinderschalenartig auf der Oberseite des Querhaupts 1, so daß die darin befindliche Druckflüssigkeit eine resultierende Kraft in der gemäß Fig. 1 von unten nach oben verlaufenden Richtung ausübt, die zur Bildung des Liniendrucks dient.

An den Längsdichtungen 4 in den übrigen Teil 7 des Zwischenraums zwischen Hohlwalze 2 und Querhaupt 1 übertretende Leckflüssigkeit wird durch eine Leitung 8′ abgeführt. Auch der Teil 7 ist durch nicht dargestellte Endquerdichtungen abgedichtet, damit die Leckflüssigkeit nicht aus den Enden der Hohlwalze 2 austritt.

Die Hohlwalze 2 ist im Bereich ihrer Länge nicht auf dem Querhaupt 1 gelagert. Es kann eine solche Lagerung zwischen einem stirnseitigen Ansatz 11 der Hohlwalze 1 und den äußeren Enden 1′ des Querhauptes vorgesehen sein. Der Ansatz 11 ist in Fig. 1 gestrichelt angedeutet. Ein solches Lager hätte einen gewissen axialen Abstand von den Endquerdichtungen 5. Es kann aber auch die Hohlwalze 2 an dem Querhaupt 1 lediglich in der Wirkebene geführt, ansonsten aber in der Wirkrichtung gegenüber dem Querhaupt 1 frei verlagerbar sein.

Jedenfalls treten im Bereich der Endquerdichtung 5 gewisse radiale Verlagerungen und auch Verkantungen der Hohlwalze 2 gegenüber dem Querhaupt 1 auf, sei es durch die Durchbiegung des Querhauptes 1, wenn außerhalb der Zeichnung in Fig.1 zwischen dem Ansatz 11 und dem Ende 1′ des Querhaupts 1 ein Lager vorgesehen ist, sei es, daß die Walze 100 zu dem Typ mit freier Beweglichkeit zwischen Hohlwalze 2 und Querhaupt 1 gehört.

Um diese Verlagerungen ohne Beeinträchtigung der Funktion bewältigen zu können, hat die Endquerdichtung 5 eine besondere Ausbildung, die anhand der Fig. 2 bis 5 erläutert wird.

Aus Fig. 2 ist ersichtlich, daß die Endquerdichtung 5 eine kreissegmentförmige Gestalt aufweist und mit ihrem Außenumfang gegen einen in die Hohlwalze 2 eingesetzten Laufring 12 anliegt. Die Endquerdichtung 5 ist in einer Umfangsnut 13 des Querhauptes 1 angeordnet, die in zur Achse des Querhauptes 1 senkrechten Ebenen gelegene Nutflanken 13′ und 13″ aufweist. Wenn die Endquerdichtung 5 an dem Laufring 12 anliegt, besteht zwischen ihrer Unterseite und dem Nutgrund 14 ein Abstand 15. Gegen das Mitdrehen beim Umlauf der Hohlwalze 2 und des Laufrings 12 ist die Endquerdichtung 5 durch einem im Querhaupt 1 sitzenden, in eine radiale Bohrung 16 der Endquerdichtung 5 eingreifenden Zapfen 17 gesichert.

In dem gezeigten Ausführungsbeispiel hat die Endquerdichtung 5 zwei in Achsrichtung durchgehende Bohrungen 18, die die Endquerdichtung 5 in Umfangsrichtung gesehen in drei etwa gleiche Teile unterteilen. Von den Bohrungen 18 erstrecken sich ebenfalls durchgehende Schlitze 19 bis zum Innenumfang der Endquerdichtung 5. Dank der durch die Bohrungen 18 und die Schlitze 19 geschaffenen Flexibilität der Endquerdichtung 5 in ihrer Ebene kann sie sich besser an den Laufring 12 anlegen.

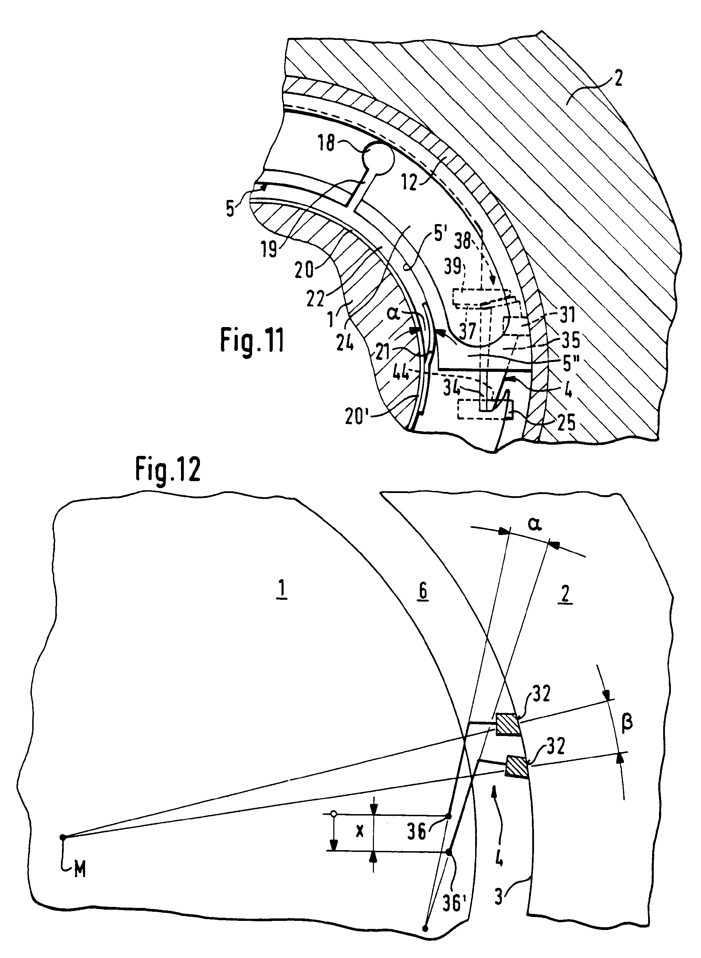

Wie aus Fig. 2 ersichtlich ist, ist auf dem Nutgrund 14 ein Blechstreifen 20 angeordnet, der genauso breit wie die Umfangsnut 13. Mit den im Bereich der Enden der Endquerdichtung 5 gelegenen Enden des Blechstreifens 20 sind federnde Blechstreifen 21 gleicher Breite verbunden, z.B. durch Punktschweißen, die der Endquerdichtung 5 entgegengerichtet sind und von dem Ende 20′ des Blechstreifens ausgehend sich in einem spitzen Winkel α (Fig. 11) gegen den Endbereich der Unterseite 5′ der Endquerdichtung 5 erstrecken und an dieser federnd und dichtend in der aus Fig. 2 und 11 ersichtlichen Weise anliegen. Die Dichtungsanordnung 20,21 kann auch aus Kunststoff bestehen und anders ausgebildet sein. Maßgeblich ist, daß unter der Endquerdichtung 5 eine Andruckkammer 22 abgeteilt ist, die radial nach innen durch de nauf dem Nutgrund 14 aufliegenden Haltestreifen 20, in Achsrichtung durch die beiden Nutflanken 13',13", radial nach außen durch die Unterseite der Endquerdichtung 5 und in Umfangsrichtung durch die beiden Federstreifen 21 begrenzt ist. Eine in der Andruckkammer 22 befindliche Druckflüssigkeit drückt die Endquerdichtung 5 gemäß Fig. 2 nach oben gegen den Laufring 12 an.

Auf der der Längskammer 6 abgewandten Seite im Bereich der Anlage an der Nutflanke 13' besitzt die Endquerdichtung 5 eine flache, d.h. beispielsweise 1 bis 2 mm tiefe, ringsum berandete, über fast die ganze Umfangserstreckung der Endquerdichtung 5 durchgehende Ausnehmung 23, die eine Entlastungskammer 24 bildet, d.h. bei Füllung mit Druckflüssigkeit einen Gegendruck erzeugt, der die Endquerdichtung 5 gegen den von der Längskammer 6 her in Achsrichtung anstehenden Druck teilweise entlastet.

Sowohl die Andruckkammer 22 als auch die Entlastungskammer 24 sind in Druckflüssigkeitsverbindung mit der Längskammer 6. Zwischen der Endquerdichtung 5 und der der Längskammer 6 benachbarten Nutflanke 13" besteht nämlich ein gewisses Spiel, welches unter dem Druck der Druckflüssigkeit in der Längskammer 6, wenn sich also die Endquerdichtung 5 fest gegen die Nutflanke 13' legt, öffnet, so daß ein schmaler Durchtrittspalt für die Druckflüssigkeit gebildet ist und diese durch die durch die Bohrungen 18 gebildeten Durchlässe in die Entlastungskammer 24 und durch die Schlitze 19 in die Andruckkammer 22 gelangen kann.

Der Druck in der Andruckkammer 22 wirkt also mit der Entlastung der Endquerdichtung 5 in Achsrichtung dahingehend zusammen, daß die Endquerdichtung 5 in der Nut 13 relativ leicht beweglich bleibt und automatisch in Anlage an dem Laufring 12 gehalten wird.

Die Längsdichtungen 4 sind, wie aus Fig. 1 ersichtlich ist, in der Mitte an einer Teilungsstelle 40 geteilt. Die Enden überlappen sich dort und sind in Längsrichtung gegeneinander verschieblich, so daß die beiden Hälften 4' und 4" sich bei unterschiedlichen thermischen Ausdehnungen des Querhaupts und der Längsdichtungen 4 ein wenig in Längsrichtung gegeneinander verlagern können, ohne daß sich an der Teilungsstelle 40 eine zu große Durchtrittsöffnung auftut. An den den Endquerdichtungen 5 benachbarten Enden sind die Endquerdichtungen durch in das Querhaupt eingesetzte und eine an der unteren Kante vorgesehene halbkreisförmige Ausnehmung 44 der Längsdichtungen 4 durchgreifende Zapfen 25 in einer Position festgelegt, in der die Stirnseite der Längsdichtung 4 mit nur geringem Spiel, jedoch ohne die Endquerdichtung 5 in der Umfangsnut 13 festzuklemmen, vor der der Längskammer 6 zugewandten Seitenfläche der Endquerdichtung 5 steht.

Die Stoßstelle der Endquerdichtung 5 und der Längsdichtung 4 ist an einer bevorzugten Ausführungsform in Fig. 11 noch einmal vergrößert dargestellt.

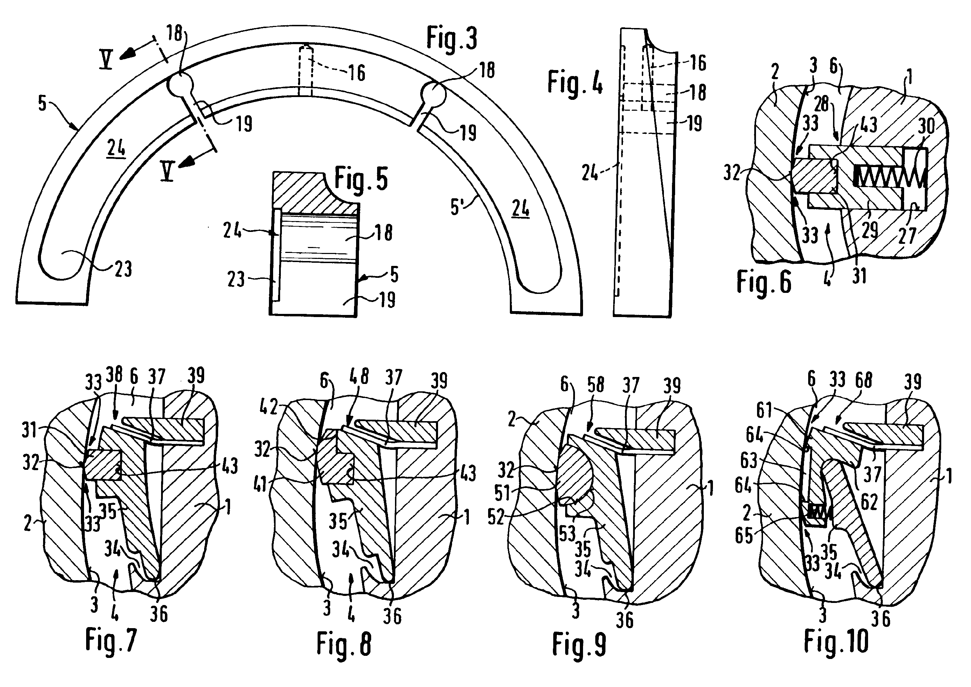

In Fig. 6 ist eine erste in Betracht kommende Ausführungsform 26 der Längsdichtung 4 wiedergegeben. Die Längsdichtung ist in einem Längsschlitz 27 des Querhaupts 1 verschiebbar geführt und besteht aus einem Streifen oder Stab 29, der unter der Wirkung einer durch die Feder 30 angedeuteten Kraft radial nach außen gegen den Innenumfang 3 der Hohlwalze 2 angedrückt wird. In der dem Innenumfang 3 zugewandten Seite des Profils 29 sitzt ein Einsatz 31 aus gleitgünstigem und verschleißarmem Material, der eine Anlagefläche 32 aufweist, in der die Gestalt des Einsatzes 31 der Gestalt des Innenumfangs 3 im wesentlichen entspricht. Außerhalb der Anlagefläche 32 ist der Einsatz 31 von dem Innenumfang 3 hinweggewölbt, so daß Längsspalte 33 entstehen, in die die am Innenumumfang 3 mitgeführte Druckflüssigkeit von der umlaufenden Hohlwalze mitgenommen wird und somit eine tragende Flüssigkeitsschicht zwischen dem Einsatz 31 und dem Innenumfang 3 aufbaut. Da die Walze in beiden Drehrichtungen laufen können soll, sind die Spalte 33 auf beiden Seiten des Einsatzes 31 vorgesehen.

In den Fig. 7 bis 10 sind verschiedene Versionen eines anderen Dichtungstyps dargestellt, bei welchem die im Querschnitt näherungsweise L-förmige Längsdichtung 4 ein Profilstreifen 35 umfaßt, der mit einer Längskante in eine rinnenförmige Ausnehmung 34 an der Seite des Querhaupts 1 eingreift, auf dem Grund 36 der rinnenförmigen Ausnehmung 34 aufruht und um diesen Grund 36, d.h. um eine parallel zur Längsachse gelegene Achse schwenkbar ist. Wenn die Längskammer 6 oben gelegen ist, steht der Profilstreifen 35 im wesentlichen aufrecht und its leicht nach außen gegen den Innenumfang 3 der Hohlwalze 2 geneigt und liegt mit einer Anlagefläche 32 gegen den Innenumfang 3 an. In dem Ausführungsbeispiel der Fig. 7 ist die Anlagefläche 32 ähnlich wie bei dem Ausführungsbeispiel der Fig. 6 an einem in einer im oberen Bereich der Längsdichtung 38 auf der dem Innenumfang 3 zugewandten Seite vorgesehenen Längsnut 43 angeordneten Einsatz 31 ausgebildet. Der Profilstreifen 35 wird gemäß Fig. 7 von oben durch ein Federblatt 37 in die Ausnehmung 34 gedrückt, welches durch eine Leiste 39 in dem Querhaupt 1 festgelegt ist.

Bei der Ausführungsform nach Fig. 7 hat der Einsatz 31 einen im wesentlichen rechteckigen Querschnitt. Die Breite der Anlagefläche 32 ist, wenn noch Einzugsspalte 33 gebildet sein sollen, beschränkt.

Die Anlagefläche 32 kann bei der in Fig. 8 wiedergegebenen Ausführungsform 48 der Längsdichtung 4 breiter gewählt werden, weil der Einsatz 41 noch seitlich vor die Stirnseite 42 des Profilstreifens 35 auslädt.

Bei der in Fig. 9 wiedergegebenen Ausführungsform ist der Einsatz 51 auf seiner Rückseite 52 teilzylindrisch ausgebildet und sitzt unbefestigt in einer ebenfalls etwa halbzylindrischen Ausnehmung 53 des Profilstreifens 35. Der Einsatz 51 kann sich um eine zur Längsachse parallele Achse drehen und sich selbständig gegenüber dem Innenumfang 3 der Hohlwalze 2 ausrichten, so daß die Anlagefläche 32 stets ganzflächig an dem Innenumfang 3 anliegt.

Auch bei der Ausführungsform 68 der Fig. 10 ist außer der Kippbarkeit des Profilstreifens 35 um den Grund 36 der Ausnehmung 34 noch eine weitere Beweglichkeit um eine zur Längsachse parallele Achse gegeben, indem ein separates Kopfprofil 61 vorgesehen ist, welches eine rinnenförmige, nach unten offene Ausnehmung 62 aufweist, in welche der Profilstreifen 35 von unten eingreift. Das Kopfprofil 61 besitzt auf der Vorderseite eine über die Länge durchgehende, an den Enden geschlossene flache Längsausnehmung 63, die sich mit Druckflüssigkeit füllt, wenn Einzugsspalte 33 vorgesehen sind. Dann nämlich wird die Druckflüssigkeit in die Ausnehmung 63 mitgenommen, an der nachfolgenden radial verlaufenden Begrenzung 64 der Ausnehmung 63 aber abgerakelt, so daß ständig ein Anteil der mitgenommenen Druckflüssigkeit am gegenüberliegenden Rand der Ausnehmung 63 nicht wieder austritt. Die richtige Anlage kann durch eine Feder 65 zwischen dem unteren Bereich des Kopfprofils 61 und dem Profilstreifen 35 gefördert werden.

Die in Fig. 11 wiedergegebene Dichtungsanordnung umfaßt die Längsdichtung 38 der Fig. 7. Der Profilstreifen 35 besitzt in unmittelbarer Nachbarschaft der Endquerdichtung 5 am unteren Rand eine halbkreisförmige Ausnehmung 44, durch die der Querbolzen 25 hindurchgeführt ist, um den richtigen Abstand der Endstirnfläche der Längsdichtung 38 von der Endquerdichtung 5 zu sichern.

In Fig. 12 ist schematisch eine günstige Anbringungsposition der Längsdichtung 4 am Querhaupt 1 erläutert. Ausgehend von der oberen Position sei angenommen, daß sich das Querhaupt an einer bestimmten Stelle seiner Längserstreckung um den Betrag x nach unten verlagert. Dieser Betrag x kann eine Durchbiegung oder eine Verlagerung des Querhauptes 1 innerhalb der Hohlwalze 2 im ganzen sein. Die Verlagerung x bedeutet, daß sich auch der Grund 36 der Ausnehmung 34 um den Betrag x nach unten in eine Position 36′ verlagert. Es sei davon ausgegangen, daß die Hohlwalze 2 ihre Position beibehält. Bei einer Verlagerung des Grundes 36 der Ausnehmung 34 in die Position 36′ wird die Längsdichtung 4 mitgenommen und bleibt in Anlage am Innenumfang 3 der Hohlwalze 2. Es ändert sich dabei aber die Kippstellung um einen Winkel $\alpha$. Die Längsdichtungen 4 sollten in einer solchen Höhe an der Seite des Querhauptes 1 angebracht werden, daß der Mittelpunktswinkel $\beta$, den die Mitte der Anlagefläche 32 in den beiden Positionen einschließt, gleich dem Änderungswinkel $\alpha$ der Kippstellung der Längsdichtung 4 ist. Dann wird nämlich der durch die Änderung der Kippstellung bei der Verlagerung des Grundes 36 der die Längsdichtungen 4 abstützenden Ausnehmungen 34 in die Position 36′ sich ergebende Winkelfehler der Anlagefläche 32 gegenüber dem Innenumfang 3 ausgeglichen, und es liegt die Anlagefläche 32 genauso an wie vorher.

## Patentansprüche

1. Dichtungsanordnung für eine Walze (100)

mit einer den arbeitenden Walzenumfang bildenden umlaufenden Hohlwalze (2),

mit einem diese der Länge nach durchgreifenden, ringsum Abstand zum Innenumfang der Hohlwalze belassenden feststehenden Querhaupt (1), auf welches an den aus der Hohlwalze hervorragenden Enden äußere Kräfte aufbringbar sind,

mit an dem Querhaupt (1) angebrachten, gegen den Innenumfang (3) der Hohlwalze dichtend anliegenden Längsdichtungen (4)

und mit ebensolchen, als Kreissegment ausgebildeten, in eine Umfangsnut (13) des Querhauptes eingreifenden, darin drehgesicherten und in Wirkrichtung der Walze verlagerbaren Endquerdichtungen (5), die zusammen in dem Zwischenraum zwischen dem Innenumfang der Hohlwalze und dem Querhaupt mindestens eine mit Druckflüssigkeit füllbare Längskammer (6) abteilen,

dadurch gekennzeichnet,

daß die Endquerdichtungen (5) zwecks hydraulischer Entlastung auf der der Längskammer (6) abgewandten Seite im Bereich der Anlage an der längskammerfernen Flanke (13′) der Umfangsnut (13) eine sich im wesentlichen über den Anlagebereich erstreckende Entlastungskammer (24) aufweist, die eine Flüssigkeitsverbindung zur Längskammer (6) besitzt,

und daß zwischen dem Grund (14) der Umfangsnut (13) und der Unterseite der Endquerdichtung (5) eine auch bei Verlagerungen der Endquerdichtung (5) in der Umfangsnut (13) geschlossen bleibende Andruckkammer (22) gebildet ist, die eine Flüssigkeitsverbindung zur Längskammer (6) besitzt und deren Druckflüssigkeit eine radial nach außen gerichtete Kraft auf die Endquerdichtung (5) ausübt.

2. Dichtungsanordnung nach Anspruch 1, dadurch gekennzeichnet, daß die Andruckkammer (22) in Umfangsrichtung durch in der Umfangsnut (13) im Bereich der Enden (5″) der Endquerdichtung (5) unter dieser angeordnete, den Querschnitt der Andruckkammer (22) ausfüllende elastisch nachgiebige Formstücke begrenzt ist.

3. Dichtungsanordnung nach Anspruch 2, dadurch gekennzeichnet, daß die Formstücke auf dem Grund der Umfangsnut (13) festgelegte, sich in einem spitzen Winkel von außen gegen die Unterseite (5′) der Endquerdichtung (5) erstreckende Federstreifen (21) von einer der Breite der Umfangsnut (13) entsprechenden Breite sind.

4. Dichtungsanordnung nach Anspruch 3, dadurch gekennzeichnet, daß die die in Umfangsrichtung gelegenen beiden Enden der Andruckkammer (21) schließenden Federstreifen (21) auf einem über den Grund (14) der Umfangsnut (13) gelegten, von einem Ende der Andruckkammer (22) zum anderen Ende reichenden Haltestreifen (20) festgelegt sind.

5. Dichtungsanordnung nach einem der Ansprüche 1 bis 4, dadurch gekennzeichnet, daß die Endquerdichtungen (5) im Bereich der Entlastungskammer (24) mindestens einen in Achsrichtung durchgehenden Durchlaß (18,19) aufweisen.

6. Dichtungsanordnung nach Anspruch 5, dadurch gekennzeichnet, daß der Durchlaß (18,19) bis an die Unterseite (5′) der Endquerdichtungen (5) durchgeht.

7. Dichtungsanordnung, nach einem der Ansprüche 1 bis 6, dadurch gekennzeichnet, daß die in Längsrichtung mit ihrer Stirnseite gegen die Endquerdichtungen (5) stossenden Längsdichtungen (4) in unmittelbarer Nachbarschaft der Endquerdichtungen (5) in Längsrichtung festgelegt und an mindestens einer Stelle (40) zwischen den Festlegepunkt derart geteilt sind, daß die der Teilungsstelle benachbarten Enden gegeneinander in Längsrichtung unter Beibehaltung der Dichtwirkung beweglich sind.

8. Dichtungsanordnung nach Anspruch 7, dadurch gekennzeichnet, daß zur Festlegung den Endquerdichtungen (5) benachbarte, eine Ausnehmung (44) der Längsdichtungen (4) durchgreifende, in das Querhaupt (1) eingreifende Querstifte (25) vorgesehen sind.

9. Dichtungsanordnung nach einem der Ansprüche 1 bis 8, dadurch gekennzeichnet, daß die Längsdichtungen als an einem Längsrand am Querhaupt (1) abgestützte, unter dem Druck der Druckflüssigkeit in der Längskammer (6) um den Längsrand gegen den Innenumfang (3) der Hohlwalze (2) kippende Profilstreifen (35) ausgebildet sind, die eine dem Innenumfang (3) der Hohlwalze (2) angepaßte Anlagefläche (32) aufweisen und in Umfangsrichtung so angeordnet sind, daß bei einer radialen Verlagerung des Querhauptes (1) gegenüber der Hohlwalze (2) die Veränderung der Orientierung der Anlagefläche (32) gegenüber dem Innenumfang (3) der Hohlwalze (2) ein Minimum ist.

10. Dichtungsanordnung nach einem der Ansprüche 1 bis 8, dadurch gekennzeichnet, daß die Längsdichtung (58, 68) längsgeteilt ist und der die Anlagefläche (32) aufweisende Teil (51,61) gegenüber dem am Querhaupt abgestützten Teil (35) um eine zur Längserstreckung der Längsdichtung (58,68) parallele Achse zur Aufrechterhaltung der Anlage der Anlagefläche (32) am Innenumfang (3) der Hohlwalze (2) schwenkbar ist.

11. Dichtunganordnung nach Anspruch 10, dadurch gekennzeichnet, daß der Querschnitt der Rückseite (53) des die Anlagefläche (32) aufweisenden Teils (51) der Längsdichtung (58) kreiszylindrisch und der die Anlagefläche (32) aufweisende Teil (51) mit der Rückseite (53) in einer Ausnehmung (52) entsprechenden Querschnitts des anderen Teils (35) angeordnet ist.

12. Dichtungsanordnung nach einem der Ansprüche 1 bis 11, dadurch gekennzeichnet, daß der der Anlagefläche (32) auf der Anlaufseite des Innenumfangs (3) der Hohlwalze (2) in Umfangsrichtung unmittelbar benachbarte Bereich der Längsdichtung (4) oder des Einsatzes (31,41,51) von dem Innenumfang (3) der Hohlwalze (2) hinweg zur Bildung eines Einzugsspalts (33) gewölbt ist.

13. Dichtungsanordnung nach einem der Ansprüche 1 bis 12, dadurch gekennzeichnet, daß in der Anlagefläche eine flache, bis auf die Anlageseite geschlossene, über fast die ganze Länge der Längsdichtung (68) durchgehende Längsausnehmung (63) vorgesehen ist.

14. Dichtungsanordnung nach einem der Ansprüche 1 bis 13, dadurch gekennzeichnet, daß die Längsdichtungen (28,38,48,58) als an einem Längsrand am Querhaupt (1) abgestütze, unter dem Druck der Druckflüssigkeit in der Längskammer (6) um den Längsrand gegen den Innenumfang (3) der Hohlwalze (2) kippende Profilstreifen (35) ausgebildet sind, die eine dem Innenumfang (3) der Hohlwalze (2) angepaßte Anlagefläche (32) aufweisen, die an einem gleitgünstigen und verschleißarmen, sich längs der Längsdichtung (28,38,48,58) erstreckenden, in einer Ausnehmung (43) derselben angeordneten Einsatz (31,41,51) ausgebildet ist.

**Claims**

1. A sealing arrangement for a roll (1∅∅)
   comprising a rotating shell (2) effective as the operative periphery of the roll,

7

a stationary beam (1) which extends through the roll over the length thereof with a gap between itself and the shell inner periphery, it being possible for external forces to be applied to the beam (1) at the ends which extend out of the shell,

longitudinal seals (4) which are disposed on the beam (1) and which are in sealing-tight engagement with the shell inner periphery (3),

and end transverse seals (5) which are each in the form of a circle segment, engage in a peripheral groove (13) in the beam (1), are secured as regards rotation in the groove (13) and are displaceable in the operative direction of the roll (1ØØ), the end transverse seals (5) co-operating to separate off in the gap between the shell inner periphery (3) and the beam (1) at least one longitudinal chamber (6) adapted to be filled with pressure liquid,

characterised in that

to reduce the hydraulic loading the end transverse seals (5) have, on the eide remote from the longitudinal chamber (6) and near the place of engagement with that flank (13') of the peripheral groove (13) which is remote from the longitudinal chamber (6), a relief chamber (24) which extends substantially over the area of contact and which has a communication for liquid with the longitudinal chamber (6),

and a pressing chamber (22) which stays closed even during movements of the end transverse seal (5) in the peripheral groove (13) is present between the base (14) of the peripheral groove (13) and the underside of the end transverse seal (5) and has a communication for liquid with the longitudinal chamber (6), the pressure liquid in the pressing chamber (22) exerting a radially outwardly directed force on the end transverse seal (5).

2. An arrangement according to claim 1, characterised in that the pressing chamber (22) is bounded in the peripheral direction by resilient mouldings which are disposed in the peripheral groove (13) near the ends (5") of the end transverse seal (5) and below the same and which fill up the cross-section of the pressing chamber (22).

3. An arrangement according to claim 2, characterised in that the mouldings are resilient strips (21) which are secured to the base of the peripheral groove (13), extend at an acute angle inwardly towards the underside (5') of the end transverse seal (5) and are of a width corresponding to the width of the peripheral groove (13).

4. An arrangement according to claim 3, characterised in that the resilient strips (21) which close the peripherally disposed two ends of the pressing chamber (21) are secured to a retaining strip (2Ø) which is disposed abvoe the base (14) of the peripheral groove (13) and which extends from one end of the pressing chamber (22) to the other.

5. An arrangement according to any of claims 1 to 4, characterised in that the end transverse seals (5) have near the load-reducing chamber (24) at least one axially continuous passage (18, 19).

6. An arrangement according to claim 5, characterised in that the passage (18, 19) extends as far as the underside (5') of the end transverse seals (5).

7. An arrangement according to any of claims 1 to 6, characterised in that the longitudinal seals (4) whose end faces abut the end transverse seals (5) lengthwise are secured lengthwise immediately adjacent the end transverse seals (5) and are so divided at at least one place (4Ø) between the positions where they are secured that the ends adjacent the place of the division are movable lengthwise relatively to one another while maintaining sealing tightness.

8. An arrangement according to claim 7, characterised in that adjacent transverse pins (25) which extend through a recess (44) in the longitudinal seals (4) and engage in the beam 1 are provided to secure the end transverse seals (5)

9. An arrangement according to any of claims 1 to 4, characterised in that the longitudinal seals are in the form of profiled strips (35) which bear by way of one longitudinal edge on the beam (1) and which the pressure of the pressure liquid in the longitudinal chamber (6) tilts around the longitudinal edge towards the shell inner periphery (3), the profiled strips (35) having a bearing or contact surface (32) adapted to the shell inner periphery (3), the profiled strips (35) being so disposed in the peripheral direction that the change in orientation of the contact surface (32) relatively to the shell inner periphery (3) is minimal in response to a radial shift of the beam (1) relatively to the shell (2).

10. An arrangement according to any of claims 1 to 4, characterised in that the longitudinal seal (58, 68) is divided lengthwise and the part (51, 61) which comprises the contact or engagement surface (32) is pivotable relatively to the part (35) borne on the beam (1) around an axis parallel to the length of the longitudinal seal (58, 68) in order to maintain the engagement between the surface (32) and the shell ither periphery (3).

11. An arrangement according to claim 1Ø, characterised in that the cross-section of the back (53) of the longitudinal seal part (51) comprising the engagement surface (32) is cylindrical and the last-mentioned part (51) has its back (53) disposed in a recess (52) of corresponding cross-section in the other part (35).

12. An arrangement according to any of claims 1 to 11, characterised in that that zone of the longitudinal seal (4) or insert (31, 41, 51) which is immediately adajcent the engagement surface (32) in the peripheral direction on the run-on side of the shell inner periphery (3) curves away therefrom to leave a draw-in gap (33).

13. An arrangement according to any one of claims 1 to 12, characterised by a shallow longitudinal recess (63) which is closed except on the contact side and which extends over substantially the whole length of the longitudinal seal (68).

14. An arrangement according to any of claims 1 to 13, characterised in that the longitudinal seals (28, 38, 48, 58) take the form of profiled strips (35) which are borne on the beam (1) by way of a longitudinal edge, are tilted by the pressure of the liquid in the longitudinal chamber (6) around the latter edge towards the shell inner periphery (3) and have a contact surface (32) which is adapted to the shell inner periphery (3) and which is devised on an easy-slide low-wear insert (31, 41, 51), the same extending along the longitudinal seal (28, 38, 48, 58) and being disposed in a recess (43) therein.

## Revendications

1. Dispositif d'étanchéité pour un rouleau (100)
comportant un rouleau creux (2), tournant, formant une surface périphérique de travail,
comportant une traverse (1) fixe traversant sur toute sa longueur le rouleau creux en laissant un intervalle périphérique par rapport à la surface intérieure du rouleau creux, des efforts extérieurs étant applicables aux extrémités de la traverse dépassant du rouleau creux,
des joints longitudinaux (4) prévus sur la traverse (1) étant appliqués de manière étanche contre la surface intérieure (3) du rouleau creux, et
des joints transversaux d'extrémité (5) en forme de segments de cercle, pénétrant dans une rainure périphérique (13) de la traverse, en y étant bloqués en rotation et en pouvant se déplacer dans la direction active du rouleau, ces joints formant dans l'intervalle entre eux la périphérique intérieure du rouleau creux et la traverse, au moins une chambre longitudinale (6) susceptible d'être remplie de fluide sous pression,
caractérisé en ce que
pour décharger hydrauliquement du côté non tourné vers la chambre longitudinale (6), au niveau de l'appui du flanc (13′) éloigné de la chambre longitudinale et appartenant à la rainure périphérique (13), les joints transversaux d'extrémité (5) comportent une chambre de décharge (24) qui s'étend pratiquement sur toute la zone d'appui et qui comporte une communication pour le liquide avec la chambre longitudinale (6),
et en ce qu'entre le fond (14) de la rainure périphérique (13) et la face inférieure du joint transversal d'extrémité (5), il y a une chambre de pression (22) restant fermée même en cas de déplacement du joint transversal d'extrémité (5) dans la rainure périphérique (13), cette chambre ayant une communication de fluide avec la chambre longitudinale (6) et son fluide sous pression exerce sur le joint transversal d'extrémité (5) une force dirigée vers l'extérieur.

2. Dispositif d'étanchéité selon la revendication 1, caractérisé en ce que la chambre de pression (22) est délimitée dans la direction périphérique par une pièce de forme élastique souple qui remplit la section de la rainure périphérique (13), au niveau des extrémités (5″) du joint transversal d'extrémité (5), sous ce joint.

3. Dispositif d'étanchéité selon la revendication 2, caractérisé en ce que les pièces de forme fixées au fond de la rainure périphérique (13) sont des bandes élastiques (21) d'une largeur correspondant à celle de la rainure périphérique (13) et qui s'étendent suivant un angle aigu de l'extérieur vers la face inférieure (5′) du joint d'étanchéité transversal (5).

4. Dispositif d'étanchéité selon la revendication 3, caractérisé en ce que les bandes élastiques (21) qui ferment les deux extrémités de la chambre de pression (22) située dans la direction périphérique, sont fixées par des bandes de fixation (20) allant d'une extrémité à l'autre de la chambre (22) au fond (14) de la rainure périphérique (13).

5. Dispositif d'étanchéité selon l'une des revendications 1 à 4, caractérisé en ce que les joints transversaux d'extrémité (5) comportent au moins un passage (18, 19) traversant dans la direction axiale au niveau de la chambre de décharge (24).

6. Dispositif d'étanchéité selon la revendication 2, caractérisé en ce que le passage (18, 19) arrive jusqu'au niveau de la face inférieure (5′) des joints transversaux d'extrémité (5).

7. Dispositif d'étanchéité selon l'une des revendications 1 à 6, caractérisé en ce que les joints longitudinaux (4) dont les faces frontales butent dans la direction longitudinale contre les joints transversaux d'étanchéité (5) sont fixés longitudinalement au voisinage immédiat des joints transversaux d'extrémité (5) et en au moins un endroit (40) entre les points de fixation, ils sont subdivisés pour que les extrémités voisines du point de division soient mobiles dans la direction longitudinale tout en conservant l'effet d'étanchéité.

8. Dispositif d'étanchéité selon la revendication 7, caractérisé en ce que pour fixer les joints transversaux d'extrémité (5), il comporte des goujons transversaux (25) traversant une cavité (44) des joints longitudinaux (4) et pénétrant dans la traverse (1).

9. Dispositif d'étanchéité selon l'une des revendications 1 à 8, caractérisé en ce que les joints longitudinaux sont réalisés sous la forme de profilés s'appuyant sur un bord longitudinal sur la traverse (1), et qui basculent sous la pression du fluide sous pression de la chambre longitudinale (6) autour du bord longitudinal contre la surface intérieure (3) du rouleau creux (2), ces profilés ayant une surface d'appui (32) adaptée à la périphérie intérieure du rouleau creux (2) et ils sont disposés dans la direction périphérique pour qu'en cas de déplacement radial de la traverse (1) par rapport au rouleau (2), la variation d'orientation de la surface d'application (32) par rapport à la surface intérieure (3) du rouleau creux (2) soit minimale.

10. Dispositif d'étanchéité selon l'une des revendications 1 à 8, caractérisé en ce que le joint longitudinal (58, 68) est divisé longitudinalement et la partie (51, 61) comportant la surface d'appui (32) peut pivoter par rapport à la partie (35) appuyée contre la traverse autour d'un axe parallèle à la longueur du joint longitudinal (58, 68) pour conserver l'appui de la surface (32) contre la surface intérieure périphérique (3) du rouleau creux (2).

11. Dispositif d'étanchéité selon la revendication 10, caractérisé en ce que la section du côté arrière (53) de la partie (51) munie de 1a surface d'appui (32) du joint longitudinal (58) est de forme cylindrique circulaire et la partie (51) munie de la surface d'appui (32) est logée par sa partie arrière (53) dans une cavité (52) de section correspondant à celle de l'autre partie (35).

12. Dispositif d'étanchéité selon l'une des revendications 1 à 11, caractérisé en ce que la zone du joint longitudinal (4) ou de la garniture (31, 41, 51) directement adjacente, dans la direction périphérique, à la surface d'appui (32) contre le côté d'attaque de la surface périphérique intérieure (3) du rouleau creux (2), est bombée à partir de la paroi intérieure (3) du rouleau creux (2) pour former une fente d'entrée (33) .

13. Dispositif d'étanchéité selon l'une des revendications 1 à 12, caractérisé en ce que la surface d'appui comporte une cavité longitudinale (63) traversant pratiquement toute la longueur du joint (68), cavité plate, fermée à l'exception du côté de l'appui.

14. Dispositif d'étanchéité selon l'une des revendications 1 à 13, caractérisé en ce que les joints longitudinaux (28, 38, 48, 58) sont réalisés sous la forme de profilés (35) s'appuyant par un bord longitudinal contre la traverse (1) et basculant autour du bord longitudinal contre la surface périphérique intérieure (3) du rouleau creux (2) sous la pression du fluide sous pression de la chambre longitudinale (6), ces profilés ayant une surface d'appui (32) adaptée à la surface périphérique intérieure (3) du rouleau creux (2), ayant une garniture (31, 41, 51) en un matériau favorisant le glissement et de faible usure, et qui s'étend le long du joint longitudinal (28, 38, 48, 58) en étant placée dans une cavité (43) de ce joint.

Fig.1

Fig. 2

Fig.3  Fig.4  Fig.5  Fig.6  Fig.7  Fig.8  Fig.9  Fig.10

Fig.11

Fig.12